# EUROPÄISCHE PATENTANMELDUNG

(11) **EP 3 552 997 A1**
(43) Veröffentlichungstag der Anmeldung: **16.10.2019**
(21) Anmeldenummer: 18166539.9
(22) Anmeldetag: 10.04.2018
(51) Int. Cl.: B65G 53/52, B65G 53/54

(54) **FÖRDEREINRICHTUNG FÜR PULVER**

(71) Anmelder: Harro Höfliger Verpackungsmaschinen GmbH, 71573 Allmersbach im Tal (DE)
(72) Erfinder: Weigel, Marco, 71573 Allmersbach im Tal (DE)
(74) Vertreter: Zurhorst, Stefan

(57) **Zusammenfassung**

Fördereinrichtung (1) für Pulver (2), welche einen Pulvereinzug (3) und eine Förderstrecke (4) mit einem Förderrohr (5) umfasst. Das Förderrohr (5) weist eine in radialer Richtung elastisch nachgiebige Umfangswand (6) auf. Außenseitig der Umfangswand (6) ist mindestens ein Satz (7) von mehreren Druckelementen (8) angeordnet, wobei die Druckelemente (8) außenseitig in Kontakt mit der Umfangswand (6) des Förderrohrs (5) stehen und derart relativ zueinander angeordnet sind, dass sie der Umfangswand (6) einen unrunden Querschnitt aufzwingen. Die Fördereinrichtung (1) weist Antriebsmittel (9) für eine relative Drehbewegung zwischen der Umfangswand (6) und dem Satz (7) von Druckelementen (8) auf.

## Beschreibung

Die Erfindung betrifft eine Fördereinrichtung für Pulver mit den Merkmalen nach dem Oberbegriff des Anspruchs 1.

Beispielsweise im Pharmabereich, aber auch im Bereich von Nahrungsergänzungsmitteln oder dgl. werden Pulver verarbeitet, deren technische Eigenschaften einige Herausforderungen an die Handhabung und insbesondere an die Förderung von einem Ort zum anderen darstellen. Insbesondere im Zulauf zu Pulverdosiersystemen sind eine geeignete Pulverzufuhr und ggf. auch eine Vordosierung angestrebt. Eine entsprechende Fördereinrichtung mit einen Pulvereinzug und mit einer Förderstrecke muss in der Lage sein, das zur Weiterverarbeitung anstehende Pulver reproduzierbar zu fördern.

Ein problematischer Aspekt besteht darin, dass verschiedene insbesondere sehr feinkörnige Pulver ein ausgeprägt kohäsives Verhalten aufweisen. Dies führt einerseits zu unerwünschten Anhaftungen an den Wänden der Fördereinrichtung. Andererseits können sich Pulverbrücken bilden, die den Durchlassquerschnitt beispielsweise eines Förderrohres überspannen und damit zu einer Blockade führen. In beiden Fällen kommt es zu Unregelmäßigkeiten oder sogar zur Unterbrechung des Pulverdurchsatzes. Die Pulverversorgung der Dosiereinrichtung ist gefährdet. Eine Vordosierung allein mittels Steuerung der Laufzeit der Fördereinrichtung scheidet wegen der unkontrollierbar schwankenden Förderleistung aus.

Der Erfindung liegt die Aufgabe zugrunde, eine gattungsgemäße Fördereinrichtung derart weiterzubilden, dass eine gleichmäßige und reproduzierbare Förderleistung erzielt ist.

Diese Aufgabe wird durch eine Fördereinrichtung mit den Merkmalen des Anspruchs 1 gelöst.

Nach der Erfindung ist eine Fördereinrichtung für Pulver vorgesehen, bei der das Förderrohr eine in radialer Richtung elastisch nachgiebige Umfangswand aufweist, und bei der außenseitig der Umfangswand mindestens ein Satz von mehreren Druckelementen angeordnet ist. Dabei stehen die Druckelemente außenseitig in Kontakt mit der Umfangswand des Förderrohrs und sind derart relativ zueinander angeordnet, dass sie der Umfangswand einen unrunden Querschnitt aufzwingen. Außerdem weist die Fördereinrichtung Antriebsmittel für eine relative Drehbewegung zwischen der Umfangswand und dem Satz von Druckelementen auf.

In Folge der genannt relativen Drehbewegung laufen die verschiedenen Achsen des unrunden Querschnitts relativ zum Förderrohr um, dessen Querschnitt eine umlaufende Formänderung erfährt. Dies bedeutet eine Walkbewegung, bei der einerseits jeder einzelne Referenzpunkt auf der Innenwand des Förderrohrs eine zyklische radiale Auslenkung erfährt. Anderseits wird der Umfangswand in den genannten Referenzpunkten eine zyklisch sich ändernde örtliche Krümmung mit entsprechend sich änderndem Krümmungsradius aufgezwungen. Beides zusammen verhindert zuverlässig die Bildung von Anhaftungen und Brücken, bzw. löst solche unmittelbar nach ihrer Entstehung wieder auf. Mit technisch einfach realisierbaren Maßnahmen ist eine reproduzierbare Durchlässigkeit des Förderrohres für das Pulver erreicht. In Folge des erreichten konstanten Pulverstromes ist eine zuverlässige Pulverversorgung der nachfolgenden Einheiten sichergestellt und sogar eine zeitgesteuerte Pulvervordosierung ermöglicht.

Die Druckelemente können Gleitschuhe oder dergleichen sein. Bevorzugt sind sie als Rollelemente insbesondere in Form von Zylinderrollen ausgebildet, können aber auch Kugeln oder dgl. sein. Bei entsprechend geringer Oberflächenpressung und Reibung wird das ohnehin durch Biegung strapazierte Material des Förderrohres geschont.

Die Umfangswand des Förderrohres weist im Bereich des Satzes von Druckelementen einen inneren, unrunden Durchlassquerschnitt mit einem längsten Querschnittsradius und mit einem kürzesten Querschnittsradius auf, wobei das Verhältnis beider Querschnittsradien als Maßstab für die zyklische Querschnittsverformung herangezogen werden kann. Je nach Eigenschaften des Pulvers können bereits geringe Querschnittsverformungen ausreichen, um die eingangs beschriebenen Effekte der Haft- und Brückenvermeidung zu erzielen. Bevorzugt ist jedoch der längste Querschnittsradius mindestens 1,2 mal so groß und insbesondere mindestens 1,5 mal so groß wie der kürzeste Querschnittsradius. Radialverschiebung und Krümmungsänderung sind hierbei so ausgeprägt, dass selbst schwierige Pulversorten mit ausgeprägt kohäsivem Verhalten zuverlässig gefördert werden können.

Für eine zuverlässige Pulverförderung kann unter Umständen ein einziger Satz von Druckelementen zur Beeinflussung eines einzigen Querschnittes des Förderrohres ausreichen. Bevorzugt weist die Fördereinrichtung jedoch mehrere Sätze von Druckelementen auf, welche entlang des Förderrohres angeordnet sind. Hierdurch können größere Längen des Förderrohres mit freier Durchlässigkeit erzielt werden. Zweckmäßig weisen die Sätze von Druckelementen einen Drehwinkelversatz relativ zueinander auf, was zu einer gegenseitigen Verstärkung bzw. Ergänzung ihrer Wirkung beitragen kann.

Ergänzend kann es vorteilhaft sein, wenn die Fördereinrichtung eine Quetscheinrichtung zur Abquetschung des inneren Durchlassquerschnittes des Förderrohrs aufweist. Hierdurch kann der Pulverdurchsatz zeitlich exakt unterbunden werden, was den Einsatz der erfindungsgemäßen Fördereinrichtung als Dosiereinrichtung oder Vordosiereinrichtung erleichtert.

Das erfindungsgemäße Wechselspiel des elastisch nachgiebigen Rohrquerschnittes mit den zugeordneten Druckelementen hält zwar den Durchlassquerschnitt frei, übt dabei jedoch keine antreibende Wirkung auf das Pulver aus. Für die eigentliche Förderung des Pulvers muss also ein anderer Mechanismus herangezogen werden. Bevorzugt wird hierzu das Förderrohr derart ausgerichtet, dass seine Längsachse im Bereich des mindestens einen Satzes von Druckelementen für eine gravimetrische Pulverförderung aufrecht verläuft. Mit anderen Worten wird unter Verzicht auf maschinellem Energieeintrag eine Pulverförderung allein infolge der wirkenden Gewichtskraft herbeigeführt.

In zweckmäßiger Weiterbildung der Erfindung weist das Förderrohr eine auswechselbare innere Auskleidung auf. Bei Verschmutzung, Verschleiß, Wechsel der Pulversorte oder dgl. reicht es aus, die alte Auskleidung zu entnehmen und gegen eine frische Auskleidung zu ersetzen. Die übrigen Komponenten der Fördereinrichtung können unangetastet bleiben. Die alte Auskleidung kann je nach Bedarf separat gereinigt oder auch einfach nur entsorgt werden.

Ausführungsbeispiele der Erfindung sind nachfolgend anhand der Zeichnung näher beschrieben. Es zeigen:
- Fig. 1: in einer schematischen Längsschnittdarstellung eine erfindungsgemäße Fördereinrichtung für Pulver mit einem Pulvereinzug, mit einem drehbar angetriebenen elastischen Förderrohr, und mit einem feststehenden Satz von Druckelementen, die der Umfangswand des Förderrohrs einen unrunden Querschnitt aufzwingen,
- Fig. 2: in einer schematischen Draufsicht den Pulvereinzug nach Fig. 1 mit Einzelheiten zu dessen Trichter und Rührer,
- Fig. 3: in einer schematischen Querschnittsdarstellung das Förderrohr nach Fig. 1 im Wechselspiel mit den äußerlich anliegenden Druckelementen,
- Fig. 4: in einer vergrößerten Detaildarstellung einen sich in Umfangsrichtung bewegenden Wandabschnitt bei aufgezwungen veränderlichen Wandradien, und
- Fig. 5: in perspektivischer, teilweise geschnittener Darstellung eine Förderstrecke mit mehreren Sätzen von Druckelementen.

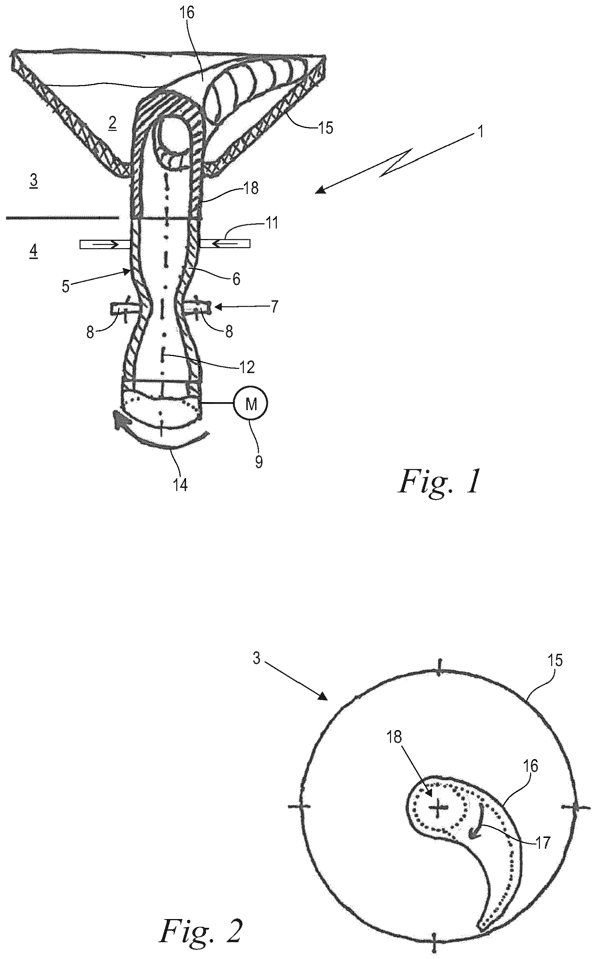

In den Fig. 1 bis 5 sind neben den körperlichen Merkmalen erfindungsgemäßer Fördereinrichtungen 1 auch Schritte und deren Ablauf eines erfindungsgemäßen Betriebsverfahrens dargestellt. Fig. 1 zeigt hierfür zunächst in einer schematischen Längsschnittdarstellung eine Übersicht einer erfindungsgemäßen Fördereinrichtung 1 für Pulver 2. Die Fördereinrichtung 1 lässt sich aufteilen in einen Pulvereinzug 3 sowie eine Förderstrecke 4. Der Pulvereinzug 3 umfasst einen Vorratsbehälter für das Pulver 2 sowie einen Auslass 18, durch den das Pulver 2 aus dem Vorratsbehälter in die Förderstrecke 4 geleitet wird. Außerdem weist der Pulvereinzug 3 einen Trichter 15 mit einem Rührer 16 auf.

Fig. 2 zeigt in einer schematischen Draufsicht den Pulvereinzug nach Fig. 1. Aus der Zusammenschau mit Fig. 1 ergibt sich, dass der hier dargestellte Trichter 15 die Funktion des Vorratsbehälters übernimmt, mit diesem also identisch ist. Natürlich können Vorratsbehälter und Trichter 15 auch getrennt voneinander ausgebildet sein. Der Rührer 16 liegt im Trichter 15 und ist darin entsprechend einem Pfeil 17 drehend bzw. umlaufend antreibbar. In seiner gezeigten bevorzugten Ausführungsform weist er eine schaufelförmig entgegen der Drehrichtung 17 nach innen und unten verlaufende geometrische Form auf. Diese trägt dazu bei, dass das Pulver 2 vom Rührer 16 erfasst und dann radial nach innen und unten durch den Auslass 18 abgeleitet wird.

Unter erneutem Bezug auf Fig. 1 ergibt sich, dass die Fördereinrichtung 1 in der Förderstrecke 4 ein Förderrohr 5 mit einer Längsachse 12 und mit einer Umfangswand 6, einen Satz 7 von mehreren Druckelementen 8 sowie Antriebsmittel 9 für eine relative Drehbewegung zwischen der Umfangswand 6 und dem Satz von Druckelementen 8 entsprechend einem Pfeil 14 umfasst. Im gezeigten Ausführungsbeispiel wirken die Antriebsmittel 9 auf das Förderrohr 5, so dass sich dieses im Betrieb um seine Längsachse 12 dreht, während der Satz 7 von Druckelementen 8 räumlich fest steht. Es kann aber auch eine umgekehrte Funktion zweckmäßig sein, bei der das Förderrohr 5 räumlich fest ohne Eigendrehung fixiert ist, während der Satz 7 von Druckelementen 8 von den Antriebsmitteln 9 angetrieben um das Förderrohr 5 bzw. um dessen Längsachse 12 umläuft.

Sinngemäß das Gleiche gilt auch für die schon erwähnte relative Drehbewegung zwischen dem Trichter 15 und dem Rührer 16. Bei feststehendem Trichter 15 wird der Rührer 16 in Richtung des Pfeiles 17 (Fig. 2) drehend angetrieben, wobei eine Verbindung bzw. ein gemeinsamer Antrieb von Förderrohr 5, Auslass 18 und Rührer 16 zweckmäßig sein kann. Ebenso kann es vorteilhaft sein, die Baueinheit aus Auslass 18 und Rührer 16 örtlich fest zu fixieren, während der Trichter 15 mit dem darin sich befindlichen Pulver 2 drehend angetrieben wird. Im Falle der vorgenannten festen Verbindung von Förderrohr 5, Auslass 18 und Rührer 16 sind Drehzahl und Drehrichtung gleich. Bei Verzicht auf eine solche Verbindung können auch unterschiedliche Drehrichtungen und/oder unterschiedliche Drehzahlen zweckmäßig sein.

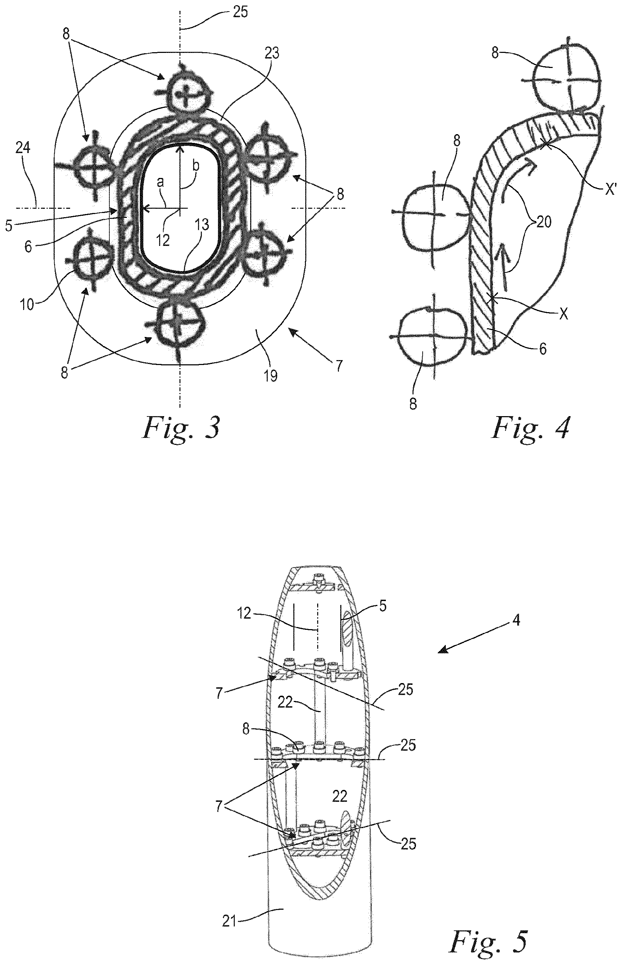

Fig. 3 zeigt in einer schematischen Querschnittsdarstellung das Förderrohr 5 nach Fig. 1 im Wechselspiel mit dem Satz 7 von Druckelementen 8. Die äußerlich anliegenden Druckelemente 8 können Gleitschuhe, Kugeln oder dergleichen sein und sind im gezeigten bevorzugten Ausführungsbeispiel als Zylinderrollen 10 ausgebildet, welche auf einem Rahmen 19 montiert und drehbar gelagert sind. Die Drehachsen der Zylinderrollen 10 liegen dabei parallel zur Längsachse 12 des Förderrohrs 5. Der Rahmen ist mit einem zentralen Durchlass 23 versehen, durch den das Förderrohr 5 hindurchgeführt ist. Der Durchlass 23 weist eine von der Kreisform abweichende, hier ovale Querschnittsform mit einer kurzen Durchlassachse 24 und mit einer langen Durchlassachse 25 auf. Die Druckelemente 8 bzw. Zylinderrollen 10 sind gleichmäßig um den Umfang des Durchlasses 23 verteilt auf einem dazu korrespondierenden Oval angeordnet und derart positioniert, dass sie radial nach innen über den Rand des Durchlasses 23 hervorstehen, und dass sie dabei mit der Außenseite der Umfangswand 6 des Förderrohres 5 in Kontakt stehen bzw. daran anliegen. Die Umfangswand 6 ist bezogen auf die Längsachse 12 in radialer Richtung soweit elastisch nachgiebig, dass eine reversibel elastische und zyklische Querschnittsverformung in nachstehend beschriebener Weise möglich ist. Anzahl und Positionierung der Druckelemente 8 ist derart gewählt, dass sie aufgrund von radialem Druck auf die Umfangswand 6 dieser einen unrunden, hier ovalen Querschnitt aufzwingen.

Hierzu sind mindestens zwei bevorzugt sich gegenüberliegende Druckelemente 8 erforderlich. Für eine präzise Querschnittsformung weist der eine hier gezeigte Satz 7 insgesamt sechs Druckelemente 8 auf. Es können aber auch andere, beispielsweise dreieckige Querschnittsformen der Umfangswand 6 angestrebt werden, wobei dann Anzahl und Position der Druckelemente 8 entsprechend anzupassen sind. Sinngemäß das Gleiche gilt dann natürlich auch für die Form des Durchlasses 23, die bevorzugt so zu wählen ist, dass kein Kontakt des Rahmens 19 mit der Umfangswand 6 des Förderrohres 5 zustande kommt. Eine weitere Möglichkeit besteht darin, auf Druckelemente 8 in Form von Einzelteilen zu verzichten, wobei - eine entsprechend gleitfähige Materialpaarung vorausgesetzt - die Kante des Durchlasses bzw. Abschnitte davon die Funktion der Druckelemente 8 übernimmt.

Jedenfalls zwingen die Druckelemente 8 der Umfangswand 6 einen unrunden, hier ovalen inneren Durchlassquerschnitt auf, welcher ausgehend von der Längsachse 12 einen kürzesten Querschnittsradius a und mit einem längsten Querschnittsradius b aufweist. Dies gilt natürlich gleichermaßen auch für abweichende unrunde, beispielsweise dreieckige Querschnittsformen. Der längste Querschnittsradius b ist jedenfalls länger, bevorzugt mindestens 1,2 mal so lang und insbesondere mindestens 1,5 mal so lang wie der kürzeste Querschnittsradius a.

Aus der Zusammenschau mit Fig. 4, in der eine vergrößerte Detaildarstellung eines Abschnittes der Umfangswand 6 im Bereich einiger Druckelemente 8 nach Fig. 3 gezeigt ist, ergibt sich folgende Funktion: In Folge der oben beschriebenen relativen Drehbewegung zwischen der Umfangswand 6 und dem Satz 7 von Druckelementen 8 entsprechend Pfeilen 20 (Fig. 4) befindet sich ein beliebiger Bezugspunkt X zyklisch umlaufend auf unterschiedlichen Relativpositionen zu den einzelnen Druckelementen 8 und erfährt folglich Radialverschiebungen, die zyklisch zwischen dem kürzesten Querschnittsradius a und dem längsten Querschnittsradius b hin und her verlaufen. In Fig. 4 sind beispielhaft zwei Relativpositionen X und X' markiert. Es ist ohne weiteres erkennbar, dass der erwähnte beliebige Bezugspunkt in der Relativposition X auf einem Querschnittsradius liegt, der vom Querschnittsradius der Relativposition X' abweicht. Außerdem ist ohne weiteres erkennbar, dass in beiden Relativpositionen X, X' die örtlichen Krümmungsradien der Kontur der Umfangswand 6 voneinander abweichen. Jeder einzelne beliebige Bezugspunkt auf der Innenseite der Umfangswand 6 erfährt also eine zyklische radiale Positionsverschiebung und eine zyklische Krümmungsveränderung. Beides zusammen verhindert ein Anhaften des Pulvers 2 an der Innenseite der Umfangswand 6 sowie die Bildung von Pulverbrücken im Durchlassquerschnitt des Förderrohres 5, bzw. entfernt solche unmittelbar nach deren eventuellem Entstehen.

Der schematischen Querschnittsdarstellung nach Fig. 3 ist noch entnehmbar, dass das Förderrohr 5 optional eine auswechselbare innere Auskleidung 13 bzw. einen sogenannten Liner aufweist. Dieser kann nach Gebrauch entnommen und gereinigt, bzw. entsorgt werden. Nach Einsatz einer frischen Auskleidung 13 ist die Anordnung wieder betriebsbereit.

Fig. 5 zeigt in perspektivischer, teilweise geschnittener Darstellung eine Förderstrecke 4 mit einem zur besseren Übersicht nur angedeuteten Förderrohr 5 sowie mit mehreren Sätzen 7 von Druckelementen 8. Für die hier gezeigten Sätze 7 von Druckelementen 8 gilt gleichermaßen das oben Gesagte. Darüber hinaus ist die Anordnung noch von einem Mantelrohr 21 umschlossen. Die einzelnen Sätze 7 von Druckelementen 8 sind mechanisch fest miteinander verbunden. Hierzu kommen Verbindungspfosten 22 zum Einsatz, die einen vorgewählten axialen Abstand der Sätze 7 zueinander und auch eine vorgewählte relative Drehwinkelposition zueinander dauerhaft aufrechterhalten. Jedenfalls sind die mehreren Sätze 7 von Druckelementen 8 in Richtung der Längsachse 12 entlang des Förderrohres 5 angeordnet. In der gezeigten bevorzugten Ausführungsform weisen sie dabei einen Drehwinkelversatz relativ zueinander auf. Dies wird daran deutlich, dass ihre langen Durchlassachsen 25 nicht parallel, sondern winklig zueinander liegen. Es kann aber auch eine achsparallele Anordnung zweckmäßig sein.

Aus der Zusammenschau der Fig. 1 und 5 ergibt sich noch, dass das Förderrohr derart ausgerichtet ist, dass seine Längsachse für eine gravimetrische Pulverförderung aufrecht verläuft. Der Begriff "aufrecht" bedeutet hier allgemein eine Ausrichtung zumindest näherungsweise in Gewichtskraftrichtung bzw. parallel dazu, und schließt auch Winkelabweichungen davon ein, bei denen sich ein selbsttätiger Pulverdurchtritt durch das Förderrohr 5 allein infolge der oben beschriebenen zyklischen Querschnittsverformung und der wirkenden Gewichtskraft einstellt. Durch Ein- bzw. Ausschalten der Antriebsmittel 9 (Fig. 1) kann die Pulverförderung in Gang gesetzt und auch wieder unterbrochen werden. Ergänzend kann entsprechend Fig. 1 eine dort nur schematisch angedeutete Quetscheinrichtung 11 zur Abquetschung des inneren Durchlassquerschnittes des Förderrohrs 5 zweckmäßig sein, um einen Pulverdurchtritt bei Bedarf mit erhöhter Zuverlässigkeit zu unterbinden. Auf diese Weise ist nicht nur eine zielgerichtete Pulverförderung, sondern auch eine Pulverdosierung möglich.

## Patentansprüche

1. Fördereinrichtung (1) für Pulver (2), umfassend einen Pulvereinzug (3) und eine Förderstrecke (4) mit einem Förderrohr (5),
**dadurch gekennzeichnet, dass** das Förderrohr (5) eine in radialer Richtung elastisch nachgiebige Umfangswand (6) aufweist, und dass außenseitig der Umfangswand (6) mindestens ein Satz (7) von mehreren Druckelementen (8) angeordnet ist, wobei die Druckelemente (8) außenseitig in Kontakt mit der Umfangswand (6) des Förderrohrs (5) stehen und derart relativ zueinander angeordnet sind, dass sie der Umfangswand (6) einen unrunden Querschnitt aufzwingen, und wobei die Fördereinrichtung (1) Antriebsmittel (9) für eine relative Drehbewegung zwischen der Umfangswand (6) und dem Satz (7) von Druckelementen (8) aufweist.

2. Fördereinrichtung nach Anspruch 1,
**dadurch gekennzeichnet, dass** die Druckelemente (8) als Rollelemente insbesondere in Form von Zylinderrollen (10) ausgebildet sind.

3. Fördereinrichtung nach Anspruch 1 oder 2,
**dadurch gekennzeichnet, dass** die Umfangswand (6) im Bereich des Satzes (7) von Druckelementen (8) einen inneren Durchlassquerschnitt mit einem längsten Querschnittsradius (b) und mit einem kürzesten Querschnittsradius (a) aufweist, und dass die Druckelemente (8) derart angeordnet sind, dass der längste Querschnittsradius (b) mindestens 1,2 mal so groß und insbesondere mindestens 1,5 mal so groß wie der kürzeste Querschnittsradius (a) ist.

4. Fördereinrichtung nach einem der Ansprüche 1 bis 3,
**dadurch gekennzeichnet, dass** die Fördereinrichtung (1) mehrere Sätze (7) von Druckelementen (8) aufweist, welche entlang des Förderrohres (5) angeordnet sind.

5. Fördereinrichtung nach Anspruch 4,
**dadurch gekennzeichnet, dass** die Sätze (7) von Druckelementen (8) einen Drehwinkelversatz relativ zueinander aufweisen.

6. Fördereinrichtung nach einem der Ansprüche 1 bis 5,
**dadurch gekennzeichnet, dass** die Fördereinrichtung (1) eine Quetscheinrichtung (11) zur Abquetschung des inneren Durchlassquerschnittes des Förderrohrs (5) aufweist.

7. Fördereinrichtung nach einem der Ansprüche 1 bis 6,
**dadurch gekennzeichnet, dass** das Förderrohr (5) eine Längsachse (12) aufweist, welche im Bereich des mindestens einen Satzes (7) von Druckelementen (8) für eine gravimetrische Pulverförderung aufrecht verläuft.

8. Fördereinrichtung nach einem der Ansprüche 1 bis 7,
**dadurch gekennzeichnet, dass** das Förderrohr (5) eine auswechselbare innere Auskleidung (13) aufweist.
